(19) 

Europäisches
Patentamt
European
Patent Office
Office européen
des brevets

(11) **EP 4 722 679 A1**

(12) **EUROPEAN PATENT APPLICATION**

(43) Date of publication:
08.04.2026 Bulletin 2026/15

(21) Application number: 25203488.9

(22) Date of filing: 19.09.2025

(51) International Patent Classification (IPC):
*G01M 11/06* (2006.01)    *B60Q 1/115* (2006.01)

(52) Cooperative Patent Classification (CPC):
**B60Q 1/10; B60Q 1/076; G01M 11/064;**
B60Q 1/115; B60Q 2200/38; B60Q 2300/132

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 03.10.2024 IT 202400021894

(71) Applicant: **Stellantis Europe S.p.A.**
**10135 Torino (TO) (IT)**

(72) Inventors:
• **DEL FRANCO, Marco**
**I-10135 Torino (IT)**

• **SACCAROLA, Stefano**
**I-10135 Torino (IT)**
• **SINDONI, Martin**
**I-10135 Torino (IT)**
• **GIROTTO, Emanuele**
**I-10135 Torino (IT)**
• **SCOLARO, Giuseppe**
**I-10135 Torino (IT)**

(74) Representative: **Buzzi, Notaro & Antonielli d'Oulx S.p.A.**
**Corso Vittorio Emanuele II, 6**
**10123 Torino (IT)**

Remarks:
Amended claims in accordance with Rule 137(2) EPC.

(54) **SYSTEM AND METHOD FOR VERIFICATION AND VALIDATION OF MOTOR-VEHICLE HEADLAMP UNITS WHICH ARE PROVIDED WITH AN AUTOMATIC CONTROL OF THE EMISSION DIRECTION**

(57) A system for verification and validation of a vehicle headlamp unit (2), of the type provided with an automatic control of the emission direction, is described. The system comprises a test chamber (9), in which are provided a stationary structure (12) that supports the headlamp unit (2), and a screen (10) placed at a predetermined distance (L) from the stationary support structure (12). The headlamp unit (2) is supported with an orientation and a position that are identical to the orientation and position of the headlamp unit (2) when it is mounted on the vehicle (1). The system further includes an electronic controller (E, E1) configured and programmed to generate and send to the electronic control unit (4) of the headlamp unit (2) input signals that simulate the input signals (6) that in the mounted condition of the headlamp unit (2) on the vehicle are sent to the electronic control unit (4) of the headlamp unit (2), for different load conditions of the vehicle. In this way, for every simulated load condition of the vehicle, it is possible to verify whether the variation of the emission direction of the headlamp unit (2) is contained within a determined field, without the need to have the entire vehicle.

FIG. 3

EP 4 722 679 A1

## Description

Field of the invention

The present invention relates to a system and a method for verification and validation of motor-vehicle headlamp units which are provided with an automatic control of the emission direction, in particular in order to define, during the development of new projects, the calibration of the leveling system of the dipped beam of the headlamp units, with the aim of guaranteeing the homologation capability of the headlamp units based on the current regulations (in Europe the regulation in force at the filing date of the present application is ECE-48).

In particular, the invention relates to a system and a method for the verification and validation of a headlamp unit of a motor vehicle,

wherein the headlamp unit is of the type comprising:

- an electrical actuator, for regulating the inclination of the light beam emitted by the headlamp unit, and
- an electronic control unit, associated with the headlamp unit and configured to activate said electrical actuator of the headlamp unit, so as to regulate the inclination of the light beam,

and wherein the motor vehicle intended to use the headlamp unit is of the type comprising one or more sensors associated with the rear suspension and/or the front suspension of the motor vehicle, configured to send data indicative of the vertical movements of the rear suspension and the front suspension to the electronic control unit of the headlamp unit, either directly, or indirectly through an electronic control unit of the motor vehicle, so as to allow the detecting of a pitch angle of the motor vehicle as a function of different load conditions of the motor vehicle, and so as to consequently activate the electrical actuator of the headlamp unit to correct the variations of the emission direction of the headlamp unit caused by variations of the load on the motor vehicle.

Prior art

Motor vehicles with headlamp units of the type indicated above, provided with an automatic control of the emission direction, have been proposed for some time, in order to avoid dazzling the drivers of oncoming vehicles, when the emission direction of the headlamp units tilts excessively upward, due to an additional load on the rear axle of the vehicle.

For the verification and validation of the automatic control system of the headlamp unit, it is current practice to place the entire motor vehicle in a test chamber, with the headlamp units to be tested mounted on it. A screen is placed at a predetermined distance from the motor vehicle, in a plane orthogonal to the longitudinal direction of the motor vehicle, so that the emission direction of the headlamp units can be evaluated based on the height from the ground of the illuminated area on the screen. In case an incorrect operation of the control system of the emission direction of the headlamp units is detected, the electronic control unit associated with each headlamp unit can be reprogrammed to correct the error.

The main drawback of the aforementioned procedure is that the verification and validation of the control system of the emission direction of the headlamp units can only be carried out when a prototype of the motor vehicle is already available. It would instead be desirable to have a system that allows performing a thorough and reliable test on the correct functionality of the automatic control system of the emission direction of a headlamp unit, having only the headlamp unit, without the need to mount it on a complete prototype of the motor vehicle.

Object of the invention

It is therefore an object of the present invention to provide a system for verification and validation of a motor-vehicle headlamp unit of the type provided with an automatic control of the emission direction that does not require performing the test on the entire motor vehicle.

In particular, an object of the invention is to provide a system of the type specified above, which is usable during a design and development phase of a motor vehicle, even before having a prototype of the entire motor vehicle, and which allows, possibly, to perform corrective actions still during the design and development phase of the headlamp unit.

Even more particularly, an object of the invention is to provide a system that allows calibrating the electronic control unit (LUF) of the headlamp unit, identifying the programming parameters on which it is necessary to intervene, for each specific project and for each specific vehicle.

A further object of the invention is to achieve the aforementioned objects with relatively simple and low-cost means.

Summary of the invention

With a view to achieving the aforementioned objects, the invention has for its object a system for verification and validation of a headlamp unit of a motor vehicle, wherein the headlamp unit and the motor vehicle are of the type indicated at the beginning of the present description, and wherein said system comprises a test chamber, in which are provided a stationary support structure, for supporting the headlamp unit, and a screen placed at a predetermined distance from the stationary support structure, and configured to be illuminated by the headlamp unit, so that a correction of the emission direction of the headlamp unit can be evaluated based on the vertical displacement of the illuminated area of the screen,

- wherein the stationary support structure is configured to support the headlamp unit with an orientation and a position, relative to a fixed reference system, which are identical to the orientation and position of the headlamp unit when it is mounted on the motor vehicle, relative to said reference system, in a predetermined load condition of the motor vehicle,

said system further including an electronic controller (E, E1) of the system, configured and programmed to:

- receive as input, or to compute, based on a series of parameters relating to the motor vehicle, a variation of the inclination of the light beam emitted by the headlamp unit that is caused by a determined variation of the load conditions of the motor vehicle, and
- generate and send to the electronic control unit of the headlamp unit, which is mounted on said stationary support structure, one or more input signals that simulate the input signals that in the mounted condition of the headlamp unit on the motor vehicle are sent to the electronic control unit of the headlamp unit, following a determined variation of the load conditions of the motor vehicle,

so that, for every simulated variation of the load conditions of the motor vehicle, it is possible to verify whether the variation of the emission direction of the headlamp unit is contained within a determined field.

In a concrete example of embodiment, the stationary support structure is configured to support both front headlamp units of a motor vehicle.

In a preferred form of embodiment, the motor vehicle on which the headlamp unit is intended to be mounted is of the type comprising a first sensor configured to detect the vertical movements of the rear suspension of the motor vehicle and a second sensor configured to detect the vertical movements of the front suspension of the motor vehicle, said electronic control unit of the motor vehicle being configured to receive the output signals from said first sensor and from said second sensor and to process these signals in order to send to the electronic control unit of the headlamp unit information on the pitch angle of the motor vehicle, said system being characterized in that the electronic controller of said system is configured to receive signals indicative of simulated vertical movements of the rear suspension and the front suspension of a motor vehicle and to consequently generate signals that are sent to the electronic control unit of the headlamp unit, which simulate the signals that in the motor vehicle are emitted by said first sensor and said second sensor in order to provide information on the pitch angle of the motor vehicle, and in that the electronic controller of the system is further configured to send to the electronic control unit of the headlamp unit further signals containing data relating to specific characteristics of the motor vehicle.

The invention also has for its object the method implemented by means of the test system described above.

Detailed description of the invention

Further characteristics and advantages of the invention will become apparent from the following description with reference to the accompanying drawings, provided purely by way of non-limiting example, in which:

figure 1 is a schematic view of a vehicle, equipped with an automatic control system of the emission direction of the front headlamp units,
figure 2 is a schematic view illustrating a conventional system for verification and validation of an automatic control system of the emission direction of headlamp units mounted on a vehicle,
figure 3 is a schematic view of a test system according to the invention,
figure 4 illustrates a perspective view of a concrete example of embodiment of the support structure of the headlamp units, forming part of the system according to the invention, and
figure 5 is a block diagram of the control system used in the present invention.

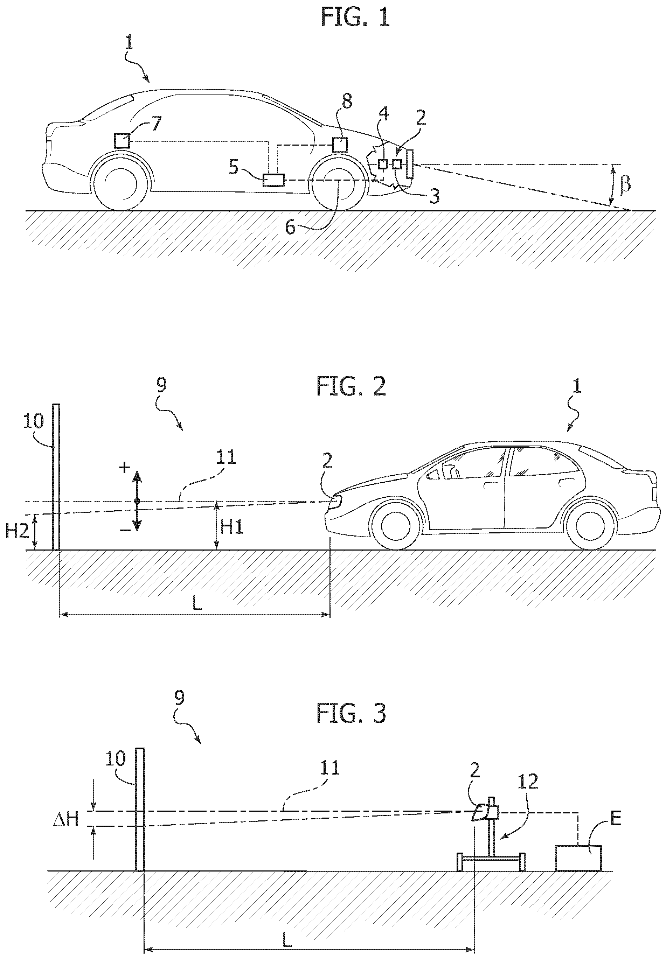

Figure 1 illustrates, by way of example, a vehicle 1 with two front headlamp units 2 (only one of which is visible in the drawing) of the type comprising an electrical actuator 3, arranged to regulate the inclination angle $\beta$ of the light beam emitted by each headlamp unit, and an electronic control unit 4, associated with each headlamp unit, configured to receive from an electronic control unit 5 of the vehicle 1 a command signal that causes an intervention of the actuator 3 to lower the emission direction of the headlamp unit when the vehicle 1 has an upward pitching movement (i.e., a rotational movement around a horizontal transverse axis, with the front part of the vehicle rising relative to the rear part).

In accordance with the prior art, the electronic control unit 5 receives output signals from a first sensor 7, associated with the rear suspension of the vehicle 1, and from a second sensor 8, associated with the front suspension of the vehicle. The sensors 7, 8 are configured to send to the electronic control unit 5 of the vehicle a signal indicative of the vertical movement of the respective suspension. The electronic control unit 5 is therefore able, based on the data relating to the vertical movements of the rear suspension and the front suspension, to detect the pitch angle of the vehicle 1 and to consequently generate a command signal 6 capable of correcting the emission direction of the front headlamp units, in order to avert the risk of dazzling for the drivers of oncoming vehicles.

Figure 2 illustrates a test equipment arranged, according to the conventional technique, for the verification and validation of the control system of the emission direction of the headlamp units.

According to the prior art, a reliable test on the correct functionality of the control system of the emission direction can only be performed if a complete prototype of the vehicle 1 is already available, on which the front headlamp units are mounted. The prototype 1 is placed in a fixed position within a test chamber 9, which is a dark room, in which a screen 10 is also arranged in a vertical plane orthogonal to the longitudinal direction of the vehicle 1, at a distance L from the headlamp units of the vehicle.

With further reference to figure 2, the emission direction of the light beam of the front headlamp units 2 of the vehicle is detected by detecting (for example, by means of optical detection systems of any known type associated with the screen 10) the height H2 at which the area of the screen 10 that is illuminated by the front headlamp units 2 of the vehicle 1 is located. If H1 is the height from the ground of the light source of each headlamp unit 2, the emission direction of the headlamp unit is detected by estimating the percentage equal to:

$$\% = (H1 - H2) / L \times 100.$$

Conventionally, said variation is considered negative if the emission direction of the beam is below a horizontal longitudinal direction 11 and positive, if the emission direction of the beam of the headlamp unit 2 is above the horizontal longitudinal direction 11, (as schematically indicated in figure 2).

The main drawback of the test equipment illustrated in figure 2 is that it implies the availability of a complete prototype of the vehicle on which the headlamp units 2 are mounted, for the verification and validation of the automatic control system of the emission direction of the headlamp units.

The invention proposes, for the first time, a test equipment that allows performing the verification and validation of the automatic control system of the emission direction of a headlamp unit, having only the headlamp unit.

Figure 3 schematically illustrates the fundamental components of the test system according to the invention. In this figure, parts common to those of figure 2 are indicated with the same references.

The system according to the invention also includes a dark test chamber 9, with the screen 10 intended to be illuminated by the headlamp unit and, possibly, optical detection systems (not illustrated) of any known type, capable of detecting the variation of the emission direction of the headlamp unit, by detecting the vertical displacement of the illuminated area on the screen.

In the form of embodiment illustrated here, the test system according to the invention receives as input (in the manner that will be described below) the data relating to the variation of the emission direction caused by the pitching of the vehicle as the load conditions vary, after which the detection of the illuminated area on the screen allows verifying that the correction of the emission direction commanded by the actuator of the headlamp unit is within a determined range.

In the case of the invention, therefore, it is not necessary to have the entire vehicle 1, it being sufficient to place the headlamp unit 2 on a stationary support structure 12 and to connect the electronic control unit of the headlamp unit 2 to an electronic controller E, arranged ad hoc for the test system.

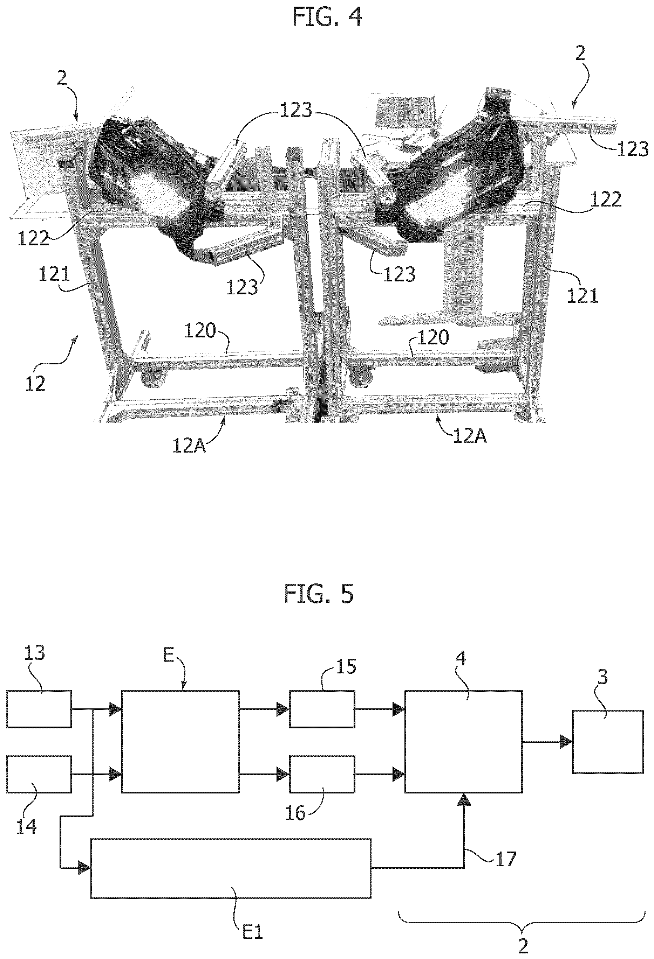

With reference to figure 4, in a concrete form of embodiment, the support structure 12 is configured to support both front headlamp units 2 of a vehicle 1. In the case of figure 4, the support structure 12 includes a pair of truss frames 12A, each including a base 120 and lateral uprights 121 to which is connected, at an adjustable height, a crossbeam 122, carrying in turn orientable arms 123, provided with brackets for the rigid connection of the respective headlamp unit. The headlamp unit is secured to said brackets by means of screws that engage the holes provided in the headlamp unit for the engagement of the fixing screws to the structure of the vehicle.

The frames 12A are designed to support each headlamp unit 2 with an orientation and a position, relative to a fixed reference system, which are strictly identical to the orientation and position of each headlamp unit when it is mounted on the vehicle 1, relative to said reference system.

According to the invention, the electronic controller E of the test system is configured and programmed to.

- receive as input, or to compute based on a series of parameters relating to the vehicle, a variation of the inclination of the light beam emitted by the headlamp unit that is caused by a determined variation of the load conditions of the vehicle, and
- generate and send to the electronic control unit 4 of the headlamp unit 2, which is mounted on said stationary support structure 12, one or more input signals that simulate the input signals 6 that in the mounted condition of the headlamp unit 2 on the vehicle are sent to the electronic control unit 4 of the headlamp unit 2, following a determined variation of the load conditions of the vehicle,

so that, for every simulated variation of the load conditions of the vehicle, it is possible to verify on the screen 10 whether the variation of the emission direction of the headlamp unit 2 is contained within a determined field.

Figure 5 shows a block diagram of the control system according to the invention in an example of embodiment. In the illustrated case, the electronic controller E is configured to receive signals 13, 14, which simulate the signals that in the real vehicle are emitted by the sensors 7, 8, associated with the suspensions of the vehicle, as the attitude of the vehicle changes due to a variation of the load. The electronic controller E processes the signals 13, 14 and generates signals 15, 16 (for example of the PWM type) that are sent to the control unit 4 of the headlamp unit 2. The electronic control unit 4 also receives a further signal 17 from an auxiliary control unit E1, arranged to provide the control unit 4 with data relating to specific characteristics of the vehicle.

The electronic controller of the test system according to the invention is therefore able to completely and reliably simulate the real situation on the vehicle, generating signals 15, 16, 17, which are identical to the signals that would be generated by the electronic control unit 5 of the vehicle for a determined load condition of the vehicle.

For each simulated load condition, corresponding to determined variations of the attitude of the front suspension and the rear suspension of the vehicle, it is therefore possible to verify on the screen 10 whether the correction of the emission direction is comprised within a determined range. If it is not, it is possible to intervene on the programming of the electronic control unit 4 associated with each headlamp unit so that it causes a correct variation of the emission direction of the light beam of the headlamp unit.

As is evident from the foregoing description, the system and the method according to the invention allow performing the verification and validation of the automatic control system of the emission direction of headlamp units, without the need to already have a complete vehicle prototype.

The main advantage of the invention is therefore that of allowing any corrective interventions on the electronic unit associated with each headlamp unit still during a design and development phase, well in advance, therefore, compared to the phase in which a complete prototype of the vehicle becomes available.

Naturally, the principle of the invention remaining unchanged, the construction details and the forms of embodiment may vary widely with respect to what has been described and illustrated, without thereby departing from the present invention, as defined in the annexed claims.

**Claims**

1.   System for verification and validation of a headlamp unit (2) of a vehicle (1),

> wherein the headlamp unit (2) is of the type comprising:

>> - an electrical actuator (3), for regulating the inclination of the light beam emitted by the headlamp unit (2), and
>> - an electronic control unit (4), associated with the headlamp unit (2) and configured to activate said electrical actuator (3) of the headlamp unit (2), so as to regulate the inclination ($\beta$) of the light beam,

and wherein the vehicle (1) intended to use the headlamp unit (2) is of the type comprising one or more sensors (7, 8) associated with the rear suspension and/or the front suspension of the vehicle, configured to send data indicative of the vertical movements of the rear suspension and the front suspension to the electronic control unit (4) of the headlamp unit, either directly, or indirectly through an electronic control unit (5) of the vehicle, so as to allow the detecting of a pitch angle of the vehicle (1) as a function of different load conditions of the vehicle, and so as to consequently activate the electrical actuator (3) of the headlamp unit (2) to correct the variations of the emission direction of the headlamp unit caused by variations of the load on the vehicle,

said system comprising a test chamber (9), in which are provided a stationary support structure (12), for supporting the headlamp unit (2), and a screen (10) placed at a predetermined distance (L) from the stationary support structure (12), and configured to be illuminated by the headlamp unit (2), so that a correction of the emission direction of the headlamp unit (2) can be evaluated based on the vertical displacement of the illuminated area of the screen (10),

> - wherein the stationary support structure (12) is configured to support the headlamp unit (2) with an orientation and a position, relative to a fixed reference system, which are identical to the orientation and position of the headlamp unit (2) when it is mounted on the vehicle (1), relative to said reference system, in a predetermined load condition of the vehicle,

said system further including an electronic controller (E, E1) of the system, configured and programmed to:

> - receive as input, or to compute based on a series of parameters relating to the vehicle, a variation of the inclination of the light beam emitted by the headlamp unit that is caused by a determined variation of the load conditions of the vehicle, and
> - generate and send to the electronic control unit (4) of the headlamp unit (2), which is mounted on said stationary support structure (12), one or more input signals that simulate the input signals (6) that in the mounted condition of the headlamp unit (2) on the vehicle are sent to the electronic control unit (4) of the headlamp unit (2), following a determined variation of the load conditions of the vehicle,

so that, for every simulated variation of the load conditions of the vehicle, it is possible to verify on the screen (10) whether the correction of the emission direction of the headlamp unit (2) is contained within a determined field.

2. System according to claim 1, **characterized in that** the stationary support structure (12) is configured to support both front headlamp units (2) of a vehicle (1).

3. System according to claim 1, **characterized in that** the vehicle (1), on which the headlamp unit (2) is intended to be mounted, is of the type comprising a first sensor (7), configured to detect the vertical movements of the rear suspension of the vehicle, a second sensor (8), configured to detect the vertical movements of the front suspension of the vehicle, said electronic control unit (5) of the vehicle being configured to receive the output signals from said first sensor (7) and from said second sensor (8) and to process these signals in order to send to the electronic control unit (4) of the headlamp unit (2) information on the pitch angle of the vehicle (1), said system being **characterized in that** the electronic controller (E) of said system is configured to receive signals (13, 14) indicative of simulated vertical movements of the rear suspension and the front suspension of a vehicle and to consequently generate signals (15, 16) that are sent to the electronic control unit (4) of the headlamp unit (2), which simulate the signals that in the vehicle are emitted by said first sensor (7) and said second sensor (8) in order to provide information on the pitch angle of the vehicle, and **in that** the electronic controller of the system is further configured to send to the electronic control unit (4) of the headlamp unit (2), further signals (17) containing data relating to characteristics of the vehicle.

4. Method for verification and validation of a headlamp unit (2) of a vehicle (1),

   wherein the headlamp unit (2) is of the type comprising:

   - an electrical actuator (3), for regulating the inclination ($\beta$) of the light beam emitted by the headlamp unit (2), and
   - an electronic control unit (4), associated with the headlamp unit (2) and configured to activate said electrical actuator (3) of the headlamp unit (2) so as to regulate the

inclination ($\beta$) of the light beam,

and wherein the vehicle (1), intended to use the headlamp unit (2) is of the type comprising:

   - one or more sensors (7, 8) associated with the rear suspension and/or the front suspension of the vehicle, configured to send data indicative of the vertical movements of the rear suspension and the front suspension to the electronic control unit (4) of the headlamp unit, either directly, or indirectly through an electronic control unit (5) of the vehicle, so as to allow the detecting of a pitch angle of the vehicle (1) as a function of different load conditions of the vehicle, and so as to consequently activate the electrical actuator (3) of the headlamp unit (2) to correct the variations of the emission direction of the headlamp unit caused by variations of the load on the vehicle,

wherein the method comprises providing a test chamber (9), in which are provided a stationary support structure (12), for supporting the headlamp unit (2) and a screen (10), placed at a predetermined distance (L) from the stationary support structure,
wherein the headlamp unit (2) is activated to illuminate the screen (10), and a variation of the emission direction of the headlamp unit (2) is evaluated based on the vertical displacement of the illuminated area of the screen (10),
wherein the stationary support structure (12) is configured to support the headlamp unit (2) with an orientation and a position, relative to a fixed reference system, which are identical to the orientation and position of the headlamp unit (2) when it is mounted on the vehicle (1), relative to said reference system, in a predetermined load condition of the vehicle (1),
said method further including the operations of:

   - receive as input, or to compute based on a series of parameters relating to the vehicle, a variation of the inclination of the light beam emitted by the headlamp unit that is caused by a determined variation of the load conditions of the vehicle, and
   - generate and send to the electronic control unit (4) of the headlamp unit (2), which is mounted on said stationary support structure (12), one or more input signals that simulate the input signals (6) that in the mounted condition of the headlamp unit (2) on the vehicle are sent to the electronic control unit (4) of the headlamp unit (2), following a determined variation of the load conditions of the vehicle,

so that, for every simulated variation of the load conditions of the vehicle, it is possible to verify whether the variation of the emission direction of the headlamp unit (2) is contained within a determined field.

**Amended claims in accordance with Rule 137(2) EPC.**

1. System for verification and validation of a headlamp unit (2) of a vehicle (1),

   wherein the headlamp unit (2) is of the type comprising:

   - an electrical actuator (3), for regulating the inclination of the light beam emitted by the headlamp unit (2), and
   - an electronic control unit (4), associated with the headlamp unit (2) and configured to activate said electrical actuator (3) of the headlamp unit (2), so as to regulate the inclination ($\beta$) of the light beam,

   and wherein the vehicle (1) intended to use the headlamp unit (2) is of the type comprising one or more sensors (7, 8) associated with the rear suspension and/or the front suspension of the vehicle, configured to send data indicative of the vertical movements of the rear suspension and the front suspension to the electronic control unit (4) of the headlamp unit, either directly, or indirectly through an electronic control unit (5) of the vehicle, so as to allow the detecting of a pitch angle of the vehicle (1) as a function of different load conditions of the vehicle, and so as to consequently activate the electrical actuator (3) of the headlamp unit (2) to correct the variations of the emission direction of the headlamp unit caused by variations of the load on the vehicle,
   said system comprising a test chamber (9), in which are provided a stationary support structure (12), for supporting the headlamp unit (2), and a screen (10) placed at a predetermined distance (L) from the stationary support structure (12), and configured to be illuminated by the headlamp unit (2), so that a correction of the emission direction of the headlamp unit (2) can be evaluated based on the vertical displacement of the illuminated area of the screen (10),

   - wherein the stationary support structure (12) is configured to support the headlamp unit (2) with an orientation and a position, relative to a fixed reference system, which are identical to the orientation and position of the headlamp unit (2) when it is mounted on the vehicle (1), relative to said reference system, in a predetermined load condition of the vehicle,

said system further including an electronic controller (E, E1) of the system, configured and programmed to:

   - receive as input, or to compute based on a series of parameters relating to the vehicle, a variation of the inclination of the light beam emitted by the headlamp unit that is caused by a determined variation of the load conditions of the vehicle, and
   - generate and send to the electronic control unit (4) of the headlamp unit (2), which is mounted on said stationary support structure (12), one or more input signals that simulate the input signals (6) that in the mounted condition of the headlamp unit (2) on the vehicle are sent to the electronic control unit (4) of the headlamp unit (2), following a determined variation of the load conditions of the vehicle,

so that, for every simulated variation of the load conditions of the vehicle, it is possible to verify on the screen (10) whether the correction of the emission direction of the headlamp unit (2) is contained within a determined field;
wherein the vehicle (1), on which the headlamp unit (2) is intended to be mounted, is of the type comprising a first sensor (7), configured to detect the vertical movements of the rear suspension of the vehicle, a second sensor (8), configured to detect the vertical movements of the front suspension of the vehicle, said electronic control unit (5) of the vehicle being configured to receive the output signals from said first sensor (7) and from said second sensor (8) and to process these signals in order to send to the electronic control unit (4) of the headlamp unit (2) information on the pitch angle of the vehicle (1),
wherein the electronic controller (E) of said system is configured to receive signals (13, 14) indicative of simulated vertical movements of the rear suspension and the front suspension of a vehicle and to consequently generate signals (15, 16) that are sent to the electronic control unit (4) of the headlamp unit (2), which simulate the signals that in the vehicle are emitted by said first sensor (7) and said second sensor (8) in order to provide information on the pitch angle of the vehicle, and wherein the electronic controller of the system is further configured to send to the electronic control unit (4) of the headlamp unit (2), further signals (17) containing data relating to characteristics of the vehicle.

2.  System according to claim 1, **characterized in that** the stationary support structure (12) is configured to support both front headlamp units (2) of a vehicle (1).

3.  Method for verification and validation of a headlamp unit (2) of a vehicle (1),

> wherein the headlamp unit (2) is of the type comprising:
>
> > - an electrical actuator (3), for regulating the inclination (β) of the light beam emitted by the headlamp unit (2), and
> > - an electronic control unit (4), associated with the headlamp unit (2) and configured to activate said electrical actuator (3) of the headlamp unit (2) so as to regulate the inclination (β) of the light beam,
>
> and wherein the vehicle (1), intended to use the headlamp unit (2) is of the type comprising:
>
> > - one or more sensors (7, 8) associated with the rear suspension and/or the front suspension of the vehicle, configured to send data indicative of the vertical movements of the rear suspension and the front suspension to the electronic control unit (4) of the headlamp unit, either directly, or indirectly through an electronic control unit (5) of the vehicle, so as to allow the detecting of a pitch angle of the vehicle (1) as a function of different load conditions of the vehicle, and so as to consequently activate the electrical actuator (3) of the headlamp unit (2) to correct the variations of the emission direction of the headlamp unit caused by variations of the load on the vehicle,
>
> wherein the method includes the use of a system according to claim 1 or 2, and comprises providing a test chamber (9), in which are provided a stationary support structure (12), for supporting the headlamp unit (2) and a screen (10), placed at a predetermined distance (L) from the stationary support structure,
> wherein the headlamp unit (2) is activated to illuminate the screen (10), and a variation of the emission direction of the headlamp unit (2) is evaluated based on the vertical displacement of the illuminated area of the screen (10),
> wherein the stationary support structure (12) is configured to support the headlamp unit (2) with an orientation and a position, relative to a fixed reference system, which are identical to the orientation and position of the headlamp unit (2) when it is mounted on the vehicle (1), relative to said reference system, in a predetermined load condition of the vehicle (1),
said method further including the operations of:

> - receive as input, or to compute based on a series of parameters relating to the vehicle, a variation of the inclination of the light beam emitted by the headlamp unit that is caused by a determined variation of the load conditions of the vehicle, and
> - generate and send to the electronic control unit (4) of the headlamp unit (2), which is mounted on said stationary support structure (12), one or more input signals that simulate the input signals (6) that in the mounted condition of the headlamp unit (2) on the vehicle are sent to the electronic control unit (4) of the headlamp unit (2), following a determined variation of the load conditions of the vehicle,

so that, for every simulated variation of the load conditions of the vehicle, it is possible to verify whether the variation of the emission direction of the headlamp unit (2) is contained within a determined field.

# FIG. 1

# FIG. 2

# FIG. 3

# FIG. 4

# FIG. 5

Europäisches
Patentamt

European
Patent Office

Office européen
des brevets

# EUROPEAN SEARCH REPORT

**Application Number**

EP 25 20 3488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KR 2015 0001548 A (KOREA AUTOMOTIVE TECH INST [KR]) 6 January 2015 (2015-01-06) * paragraph [0001] - paragraph [0052] * * figures 1-4 * | 1-4 | INV. G01M11/06 ADD. B60Q1/115 |
| Y | CN 111 879 502 A (FAW BESTURN CAR CO LTD) 3 November 2020 (2020-11-03) * paragraph [0106] - paragraph [0115] * * figure 1 * | 1-4 | |
| A | US 4 204 270 A (D ORSAY EMMANUEL H POIRIER D A [FR]) 20 May 1980 (1980-05-20) * column 4, line 12 - line 65 * | 1,3,4 | |
| A | CN 100 580 409 C (SHANGHAI KOITO VEHICLE LAMP CO LTD) 13 January 2010 (2010-01-13) * the whole document * | 1-4 | |
| A | EP 0 803 401 A2 (DENSO CORP [JP]) 29 October 1997 (1997-10-29) * column 2, line 36 - column 5, line 40 * * figure 1 * | 3 | |

**TECHNICAL FIELDS SEARCHED (IPC)**

G01M
B60Q

The present search report has been drawn up for all claims

| Place of search | Date of completion of the search | Examiner |
|---|---|---|
| The Hague | 31 October 2025 | Verdoodt, Erik |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 3488

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2025

| Patent document cited in search report | | Publication date | Patent family member(s) | | Publication date |
|---|---|---|---|---|---|
| KR 20150001548 | A | 06-01-2015 | NONE | | |
| CN 111879502 | A | 03-11-2020 | NONE | | |
| US 4204270 | A | 20-05-1980 | DE | 2742271 A1 | 30-03-1978 |
| | | | ES | 462590 A1 | 16-06-1978 |
| | | | FR | 2365461 A1 | 21-04-1978 |
| | | | GB | 1559906 A | 30-01-1980 |
| | | | IT | 1192233 B | 31-03-1988 |
| | | | JP | S5351837 A | 11-05-1978 |
| | | | US | 4204270 A | 20-05-1980 |
| CN 100580409 | C | 13-01-2010 | NONE | | |
| EP 0803401 | A2 | 29-10-1997 | DE | 69707047 T2 | 20-06-2002 |
| | | | EP | 0803401 A2 | 29-10-1997 |
| | | | JP | 3384236 B2 | 10-03-2003 |
| | | | JP | H09286274 A | 04-11-1997 |

EPO FORM P0459

For more details about this annex : see Official Journal of the European Patent Office, No. 12/82